# EUROPÄISCHE PATENTANMELDUNG

(11) **EP 3 476 798 A1**
(43) Veröffentlichungstag der Anmeldung: **01.05.2019**
(21) Anmeldenummer: 17020492.9
(22) Anmeldetag: 24.10.2017
(51) Int. Cl.: C01B 3/50, C01B 17/04

(54) **VERFAHREN UND ANLAGE ZUR GEWINNUNG VON WASSERSTOFF UND VERFAHREN UND ANLAGE ZUR GEWINNUNG EINES SYNTHESEPRODUKTS UNTER VERWENDUNG DIESES WASSERSTOFFS**

(71) Anmelder: Linde Aktiengesellschaft, 80331 München (DE); WorleyParsons Group Inc., Monrovia, California 91016 (US)
(72) Erfinder: Jell, Anton, 85586 Poing (DE); Guzmann, Marcus, 82541 Münsing (DE); Pollitt, Steve, Cuffley, Hertfordshire EN6 4EJ (GB); Phipps-Jones, Andrew, London (GB)
(74) Vertreter: Gellner, Bernd

(57) **Zusammenfassung**

Es wird ein Verfahren (100) zur Gewinnung von Wasserstoff vorgeschlagen, bei dem vorgesehen ist, dass ein Sauergasgemisch unter Erhalt eines Wasserstoff enthaltenden Claus-Abgases in einer Claus-Anlage (30) mit einem oder mehreren Claus-Öfen (31) und mit einer oder mehreren katalytischen Claus-Stufen (32a, 32b, 32c) bearbeitet wird, wobei der oder die Claus-Öfen (31) sauerstoffangereichert betrieben werden, und dass der Wasserstoff aus zumindest einem Teil des Claus-Abgases oder aus zumindest einem Teil eines aufbereiteten Gasgemischs, das unter Verwendung zumindest eines Teils des Claus-Abgases gebildet wird, gewonnen wird. Eine Anlage zur Gewinnung von Wasserstoff und ein Verfahren und eine Anlage zur Gewinnung eines Syntheseprodukts unter Verwendung dieses Wasserstoffs sind ebenfalls Gegenstand der vorliegenden Erfindung.

## Beschreibung

Die vorliegende Erfindung betrifft ein Verfahren und eine Anlage zur Gewinnung von Wasserstoff und ein Verfahren und eine Anlage zur Gewinnung eines Syntheseprodukts unter Verwendung des entsprechend gewonnenen Wasserstoffs gemäß den Oberbegriffen der unabhängigen Patentansprüche.

### Stand der Technik

Wasserstoff wird in der chemischen Industrie beispielsweise für Hydrierungen in petrochemischen Prozessen, in organischen und anorganischen Synthesen sowie in der Metallurgie eingesetzt. Zur Gewinnung von Wasserstoff sind unterschiedliche Verfahren und Anlagen bekannt und beispielsweise im Artikel "Hydrogen" in Ullmann's Encyclopedia of Industrial Chemistry, Onlineveröffentlichung 16. September 2013, DOI: 10.1002/14356007.a13_297.pub3, insbesondere Kapitel 4, beschrieben.

Die Bereitstellung von Wasserstoff für die genannten Zwecke erweist sich häufig als aufwendig, weil hierzu separate Anlagen bzw. Anlagenkomponenten bereitgestellt werden müssen. Die vorliegende Erfindung stellt sich daher die Aufgabe, eine einfachere und kostengünstigere Möglichkeit zur Gewinnung von Wasserstoff aufzuzeigen. Insbesondere soll diese einfach und effizient mit einem oder mehreren anderen Verfahren oder Verfahrensschritten kombinierbar sein, in dem oder denen Wasserstoff benötigt wird oder in denen weitere Reaktionspartner für Synthesen, in denen Wasserstoff eingesetzt wird, bereitgestellt werden.

### Offenbarung der Erfindung

Vor diesem Hintergrund schlägt die vorliegende Erfindung ein Verfahren und eine Anlage zur Gewinnung von Wasserstoff und ein Verfahren und eine Anlage zur Gewinnung eines Syntheseprodukts unter Verwendung entsprechend gewonnenen Wasserstoffs mit den Merkmalen der jeweiligen unabhängigen Patentansprüche vor. Ausgestaltungen der Erfindung sind Gegenstand der abhängigen Patentansprüche sowie der nachfolgenden Beschreibung.

Vor der Erläuterung der Vorteile der vorliegenden Erfindung werden nachfolgend einige bei der Beschreibung der Erfindung verwendete Begriffe näher definiert.

Gasgemische können im hier verwendeten Sprachgebrauch reich oder arm an einer oder mehreren Komponenten sein, wobei der Begriff "reich" für einen Gehalt von wenigstens 80%, 90%, 95%, 99%, 99,9% oder 99,99% und der Begriff "arm" für einen Gehalt von höchstens 20%, 10%, 5%, 1%, 0,01% oder 0,01% auf molarer, Gewichts- oder Volumenbasis stehen kann. Im Zusammenhang mit den nachfolgend erläuterten Sauergasen bzw. Sauergasgemischen wird der Begriff "reich" (engl. rich) typischerweise für Gehalte von mehr als 80% und der Begriff "arm" bzw. "mager" (engl lean) für Gehalte von weniger als 80% verwendet. Der Begriff "überwiegend" kann hier insbesondere dem Begriff "reich" entsprechen.

Gasgemische können im hier verwendeten Sprachgebrauch ferner angereichert oder abgereichert an einer oder mehreren Komponenten sein, wobei sich diese Begriffe auf einen entsprechenden Gehalt in einem anderen Gasgemisch beziehen, unter Verwendung dessen das betrachtete Gasgemisch gebildet wurde. Das betrachtete Gasgemisch ist dabei "angereichert", wenn es zumindest den 2-fachen, 5-fachen, 10-fachen, 100-fachen oder 1.000-fachen Gehalt der bezeichneten Komponente(n) aufweist, und "abgereichert", wenn es höchstens den 0,5-fachen, 0,1-fachen, 0,01-fachen oder 0,001-fachen Gehalt der bezeichneten Komponente(n) aufweist.

Ist hier davon die Rede, dass ein Gasgemisch unter Verwendung eines anderen Gasgemischs "gebildet" wird, sei darunter verstanden, dass das betrachtete Gasgemisch zumindest einige der in dem anderen Gasgemisch enthaltenen oder in diesem gebildete Komponenten aufweist. Ein Bilden eines Gasgemischs aus einem anderen kann beispielsweise ein Abzweigen eines Teils des Gasgemischs, ein Zuspeisen einer oder mehrerer weiterer Komponenten oder Gasgemischs, ein chemisches oder physikalisches Umsetzen zumindest einiger Komponenten sowie ein Erwärmen, Abkühlen, Verdampfen, Kondensieren usw. umfassen. Ein "Bilden" eines Gasgemischs aus einem anderen Gasgemisch kann aber auch lediglich die Bereitstellung des anderen Gasgemischs oder eines Teils hiervon in geeigneter Form, beispielsweise in einem Behälter oder einer Leitung, umfassen.

Die vorliegende Anmeldung verwendet zur Charakterisierung von Drücken und Temperaturen die Begriffe "Druckniveau" und "Temperaturniveau", wodurch zum Ausdruck gebracht werden soll, dass entsprechende Drücke und Temperaturen in einer entsprechenden Anlage nicht in Form exakter Druck- bzw. Temperaturwerte verwendet werden müssen. Jedoch bewegen sich derartige Drücke und Temperaturen typischerweise in bestimmten Bereichen, die beispielsweise ± 1%, 5%, 10%, 20% oder 25% um einen Mittelwert liegen. Entsprechende Druckniveaus und Temperaturniveaus können in disjunkten Bereichen liegen oder in Bereichen, die einander überlappen. Dasselbe Druckniveau kann beispielsweise auch noch vorliegen, wenn es zu unvermeidlichen Druckverlusten kommt. Entsprechendes gilt für Temperaturniveaus. Bei dem hier in bar angegebenen Druckniveaus handelt es sich um Absolutdrücke.

### Vorteile der Erfindung

Die vorliegende Erfindung beruht auf der überraschenden Erkenntnis, dass ein Claus-Abgas, d.h. ein Gasgemisch, das in einer Claus-Anlage bzw. einem Claus-Verfahren, das zur Behandlung von Sauergas eingesetzt wird, eine besonders einfach und vorteilhaft zu nutzende Quelle für Wasserstoff darstellt. Dies ist insbesondere dann der Fall, wenn die Claus-Anlage unter Verwendung von Sauerstoff oder gegenüber Luft an Sauerstoff angereicherten und insbesondere im oben erläuterten Sinn sauerstoffreichen Gasgemischen anstatt mit Luft betrieben wird.

Der Einsatz von Claus-Anlagen zur Behandlung von Gasgemischen, die Schwefelwasserstoff enthalten, ist seit langem bekannt. Claus-Anlagen eignen sich insbesondere zur Behandlung des bereits erwähnten Sauergases, das aus Erdgas oder anderen Gasgemischen aus industriellen Prozessen abgetrennt werden kann. Derartiges Sauergas umfasst als Hauptkomponenten typischerweise Kohlendioxid und Schwefelwasserstoff. In geringeren Anteilen können weitere Schwefelverbindungen und andere Komponenten enthalten sein.

Die Aufbereitung von Erdgas ist beispielsweise im Artikel "Natural Gas" in Ullmann's Encyclopedia of Industrial Chemistry, Onlineveröffentlichung 15. Juli 2006, DOI: 10.1002/14356007.a17_073.pub2, beschrieben. Zum Verständnis der vorliegenden Erfindung sei insbesondere auf die Kapitel 2.4, "Removal of Carbon Dioxide and Sulfur Components", und 2.7, "Recovery of Sulfur", verwiesen.

Eine Claus-Anlage zur Behandlung eines Schwefelwasserstoff enthaltenden Gasgemischs, insbesondere von aus Erdgas abgetrenntem Sauergas (für ein entsprechendes Verfahren gelten die folgenden Erläuterungen in gleicher Weise), umfasst einen thermischen und katalytischen Teil. Der thermische und der katalytische Teil werden zusammen auch als SRU (engl. Sulfur Removal Unit) zusammengefasst.

Der thermische Teil umfasst im Wesentlichen einen Claus-Ofen. In diesem wird unter Zugabe von Luft oder Sauerstoff ein Teil des in dem eingespeisten Gasgemisch enthaltenen Schwefelwasserstoffs unter Bildung von Schwefeldioxid verbrannt. An den thermischen Teil der Claus-Anlage schließt sich der katalytische Teil an. Dieser besteht aus mehreren, i.d.R. zwei oder drei, katalytischen Claus-Stufen. In diesen wird das bei der Verbrennung gebildete Schwefeldioxid mit Schwefelwasserstoff gemäß der nachfolgend angegebenen Claus-Reaktion

2 H₂S + SO₂ → 2/x Sₓ + 2 H₂O + Wärme (1)

gebildet. Um eine hohe Schwefelrückgewinnungsrate zu erzielen, kann die Verbrennung im Claus-Ofen beispielsweise derart durchgeführt werden, dass ein Drittel des Schwefelwasserstoffs zu Schwefeldioxid verbrannt wird. Es kann auch ein sehr geringer Überschuss von Schwefelwasserstoff eingestellt werden, um eine Sulfatbildung am Claus-Katalysator zu unterbinden.

Unter dem Druck immer schärferer Umweltauflagen und im Bestreben, die Schwefelrückgewinnungsrate weiter zu steigern, sind zahlreiche Verfahren entwickelt worden, um das Claus-Abgas (engl. Claus Tail Gas) weiterzubehandeln und insbesondere noch enthaltenes Schwefeldioxid zu entfernen. Unter einem "Claus-Abgas" wird dabei nachfolgend generell ein Gasgemisch verstanden, das einer katalytischen Claus-Stufe entnommen wird. Ein Claus-Abgas ist insbesondere gegenüber dem Sauergas, das der Claus-Anlage zugeführt wird, an Schwefelwasserstoff abgereichert bzw. arm an oder frei von Schwefelwasserstoff. Ein Claus-Abgas kann insbesondere geringe Mengen an Schwefeldioxid enthalten. Auch weitere Komponenten können in einem entsprechenden Claus-Abgas enthalten sein.

Das Claus-Abgas bzw. bestimmte Komponenten des Claus-Abgases können in entsprechenden Verfahren in einem Reaktor reduziert bzw. hydriert werden. Entsprechende Verfahren werden nachfolgend auch unter dem Begriff "hydrierende" Claus-Abgasreinigung zusammengefasst. Aus Schwefeldioxid wird auf diese Weise wieder Schwefelwasserstoff gebildet, der anschließend aus dem Claus-Abgas auf unterschiedliche Weise entfernt werden kann. Die zur Behandlung eines Claus-Abgases wie zuvor erläutert verwendeten Anlagenteile werden auch als TGTU (engl. Tail Gas Treatment Unit) bezeichnet.

An die Hydrierung können sich ein Quench mit Wasser und eine Wasserentfernung anschließen. Nach der Wasserentfernung kann das Claus-Abgas unter Zugabe von Luft in einen Direktoxidationsreaktor gegeben werden, in dem Schwefelwasserstoff selektiv nach der für die Direktoxidation geltenden Reaktionsgleichung

2 H₂S+O₂ → 2/x Sₓ + 2 H₂O + Wärme (2)

zu elementarem Schwefel oxidiert wird. Der Direktoxidationsreaktor kann beispielsweise im MODOP-Verfahren einstufig oder zweistufig mit zwischengeschalteter Schwefelkondensation ausgeführt werden.

Anstelle einer Direktoxidation kann im sogenannten BSR- bzw. Amin-Verfahren nach der Hydrierung bzw. Reduktion auch eine Wäsche, insbesondere eine Aminwäsche, erfolgen, mittels derer die reduzierten bzw. hydrierten Komponenten, insbesondere Schwefelwasserstoff, aus dem entsprechend behandelten Claus-Abgas ausgewaschen werden können. Grundsätzlich ähnelt oder gleicht eine entsprechende Wäsche zumindest im Prinzip einer Wäsche, wie sie auch zur Abtrennung von Sauergas aus Erdgas oder anderen Gasgemischen eingesetzt werden kann.

Bei der beschriebenen hydrierenden Claus-Abgasreinigung muss dem Claus-Abgas herkömmlicherweise ein Hydriergas zugegeben werden, das es ermöglicht, Schwefelverbindungen, insbesondere Schwefeldioxid, zu Schwefelwasserstoff zu hydrieren. Neben einer Hydrierung der Schwefelverbindungen wie Schwefeldioxid zu Schwefelwasserstoff findet auch ggf. eine Hydrolyse von Carbonylsulfid und/oder Schwefelkohlenstoff statt. Dies hat zur Folge, dass im Wesentlichen alle im Claus-Abgas enthaltenen Schwefelverbindungen in Schwefelwasserstoff umgewandelt werden und damit anschließend entfernt werden können.

Üblicherweise wird das Hydriergas in entsprechenden Verfahren mittels eines sogenannten Reduziergasgenerators (engl. Reducing Gas Generator, RGG) erzeugt. Hierbei handelt es sich um einen unterstöchiometrisch betriebenen Ofen, in dem Kohlenwasserstoffe, insbesondere Erdgas, unterstöchiometrisch verbrannt und dabei Wasserstoff und Kohlenmonoxid produziert werden.

In der hydrierenden Claus-Abgasreinigung wird über die Kohlenmonoxid-Shiftreaktion

CO + H₂O → CO₂ + H₂ (3)

aus Kohlenmonoxid nahezu vollständig Wasserstoff erzeugt. Dieser Wasserstoff steht ebenfalls als Hydriergas zur Verfügung.

Der Reduziergasgenerator ermöglicht außerdem, das Gasgemisch auf die für die Hydrierung erforderliche Reaktionstemperatur des Hydrierkatalysators einzustellen. Diese liegt üblicherweise im Bereich von etwa 280 °C. Bei hohen Gehalten an Schwefeldioxid im Claus-Abgas kann der Bedarf an Wasserstoff bzw. Kohlenmonoxid so groß werden, dass der Reduziergasgenerator mit so viel Brenngas betrieben werden muss, dass das Claus-Abgas auf eine Temperatur erwärmt wird, die oberhalb der erforderlichen Reaktionstemperatur des Hydrierkatalysators liegt. Aus diesem Grund kann ein zusätzlicher Wärmetauscher zur Temperatureinstellung für die Hydrierung erforderlich sein.

Beschränkungen in der Kapazität bestehender Claus-Anlagen können ohne umfangreiche Anlagenmodifikationen dadurch überwunden werden, dass der bereits zuvor angesprochene Betrieb unter Verwendung von Sauerstoff oder gegenüber Luft an Sauerstoff angereicherten und insbesondere im oben erläuterten Sinn an Sauerstoff reichen Gasgemischen erfolgt. Der Sauerstoff oder das gegenüber atmosphärischer Luft an Sauerstoff angereicherte Gasgemisch wird dem Claus-Ofen zugeführt. Ist ein Reduziergasgenerator vorhanden, kann auch dieser mit Sauerstoff oder einem gegenüber atmosphärischer Luft an Sauerstoff angereicherten Gasgemisch betrieben werden. Entsprechende Verfahren werden in der Fachwelt dabei auch unter dem Begriff "Sauerstoffanreicherung" (engl. Oxygen Enrichment) zusammengefasst.

Durch das zumindest teilweise Ersetzen von Luft durch Sauerstoff oder durch ein gegenüber atmosphärischer Luft an Sauerstoff angereichertes Gasgemisch kann dem Claus-Ofen und damit der Claus-Anlage insgesamt eine größere Menge an Sauergas pro Zeiteinheit zugeführt werden, da einerseits die Menge an für die Reaktion benötigtem Sauerstoff erhöht wird und damit eine größere Menge an Schwefelwasserstoff umgesetzt werden kann, und andererseits geringere Mengen an Inertgasen der eingesetzten Luft, insbesondere Stickstoff, durch die Anlage geführt werden müssen. Auf diese Weise lassen sich die Kapazität einer entsprechenden Anlage und damit die erzeugbare Schwefelmenge erhöhen.

Da in einer Claus-Anlage Schwefelwasserstoff zu elementarem Schwefel umgesetzt und abgeschieden wird, enthält das verbleibende Abgas Kohlendioxid und Stickstoff als Hauptkomponenten, wenn keine Sauerstoffanreicherung vorgenommen wird. Bei einer Sauerstoffanreicherung ist hingegen der Stickstoffgehalt je nach dem ggf. verbleibenden Stickstoffgehalt der eingesetzten Gasgemische gegenüber der Verwendung von Luft entsprechend reduziert. Bei der Verwendung von reinem Sauerstoff kann der Stickstoffgehalt auf einen minimalen Wert herabgesetzt werden. Auf diese Weise kann die Gewinnung der anderen Komponenten erleichtert werden.

Die vorliegende Erfindung schlägt insgesamt ein Verfahren zur Gewinnung von Wasserstoff vor, bei dem vorgesehen ist, dass ein Sauergasgemisch unter Erhalt eines Wasserstoff enthaltenden Claus-Abgases in einer Claus-Anlage mit einem oder mehreren Claus-Öfen und mit einer oder mehreren katalytischen Claus-Stufen bearbeitet wird, wobei der oder die Claus-Öfen sauerstoffangereichert betrieben werden, und dass der Wasserstoff aus zumindest einem Teil des Claus-Abgases oder aus zumindest einem Teil eines aufbereiteten Gasgemischs, das unter Verwendung zumindest eines Teils des Claus-Abgases gebildet wird, gewonnen wird.

Wie bereits erwähnt, wurde überraschend erkannt, dass ein Claus-Abgas, das insbesondere unter Verwendung einer sauerstoffangereichert betriebenen Claus-Anlage erhalten wird, auch dann stromab einer hydrierenden Abgasbehandlung, in der Wasserstoff verbraucht wird, noch hohe Wasserstoffgehalte aufweist, wenn kein Reduziergasgenerator eingesetzt wird, also kein zusätzlicher Wasserstoff zugegeben wird. Generell wird in einem entsprechenden Verfahren eine große Menge an Wasserstoff gebildet. Ohne hierdurch eine Einschränkung des Erfindungsgegenstands vornehmen und weiteren Erkenntnissen vorgreifen zu wollen, könnte eine Erklärung hierfür darin bestehen, dass unter den spezifischen, beim sauerstoffangereicherten Betrieb vorliegenden Bedingungen zumindest ein Teil des gemäß bei der Verbrennung von Schwefelwasserstoff gebildeten Wassers zu Wasserstoff und Sauerstoff dissoziiert. Der beschriebene, in-situ entstehende Sauerstoff reagiert unter den vorliegenden Bedingungen weiter, beispielsweise zu Kohlendioxid oder Schwefeldioxid, der Wasserstoff verbleibt im Claus-Abgas.

Auch in der Abgasbehandlung kann auf diese oder auf andere Weise Wasserstoff in situ gebildet werden. Auch wenn kein Reduziergasgenerator vorhanden ist, reicht der auf diese oder andere Weise gebildete Wasserstoff daher für die Hydrierung in der Abgasbehandlung mehr als aus. In einer besonders bevorzugten Ausgestaltung der vorliegenden Erfindung wird das Verfahren bzw. eine entsprechende Anlage also ohne einen Reduziergasgenerator betrieben. Der verbleibende Überschuss an Wasserstoff kann als Wasserstoffprodukt gewonnen werden. Selbstverständlich ist aber auch ein Betrieb mit einem Reduziergasgenerator grundsätzlich möglich.

In dem Claus-Abgas stromauf oder stromab der Abgasbehandlung kann der Wasserstoff in einer Konzentration von mehr als 5%, insbesondere mehr als 10% und bis zu 45% vorliegen, wohingegen Kohlendioxid im überwiegenden Anteil des verbleibenden Rests vorliegt. Der Wasserstoff kann insbesondere in einer Konzentration von 20 bis 40% oder 30 bis 40% vorliegen. Die entsprechenden Angaben bezeichnen Molprozent. Stickstoff ist hingegen aufgrund des sauerstoffangereicherten Betriebs nur in geringen Anteilen enthalten.

Wie bereits erwähnt, wird die Claus-Anlage im Rahmen der vorliegenden Erfindung sauerstoffangereichert betrieben, es werden also dem oder den Claus-Öfen reiner Sauerstoff oder ein oder mehrere gegenüber atmosphärischer Luft an Sauerstoff angereicherte Gasgemische zugeführt. Auf diese Weise erleichtert sich insbesondere die Gewinnung des Wasserstoffs, der nicht aufwendig, insbesondere kryogen oder absorptiv, von Stickstoff abgetrennt werden muss. Besonders vorteilhaft ist dabei, wenn dem oder den Claus-Öfen oder der Claus-Anlage insgesamt (d.h. auch einem ggf. vorhandenen Reduziergasgenerator) ausschließlich an Stickstoff arme oder freie Gase oder Gasgemische zugeführt werden. Es ist jedoch auch möglich, (nur) den oder die Claus-Öfen mit ausschließlich an Stickstoff armen oder freien Gasen oder Gasgemischen zu betreiben und auf einen Regeneriergasgenerator zu verzichten oder den Regeneriergasgenerator mit atmosphärischer Luft oder sauerstoffangereicherter Luft zu betreiben. Reststickstoff kann weiterhin vorhanden sein und beispielsweise aus dem Sauergasgemisch in das Claus-Abgas übergehen.

Werden in den Claus-Öfen ausschließlich an Stickstoff arme oder freie Gase unter Anwendung einer Sauerstoffanreicherung verwendet, ist das Claus-Abgas im Wesentlichen aus Kohlendioxid und Wasserstoff zusammengesetzt. Aus diesem Gasgemisch kann Kohlendioxid vergleichsweise einfach kryogen oder mittels einer Membran von Wasserstoff abgetrennt werden.

Durch den sauerstoffangereicherten Betrieb kann auch ggf. eine besonders vorteilhafte Verfahrensvariante verwirklicht werden, gemäß der dem oder den Claus-Öfen ausschließlich an Kohlenwasserstoffen arme oder freie Gase oder Gasgemische zugeführt werden. Dies kann insbesondere bei einem ausreichenden Gehalt des eingespeisten Sauergasgemischs an Schwefelwasserstoff erfolgen. In diesem Fall kann, mit anderen Worten, gemäß einer besonders bevorzugten Ausführungsform der Erfindung auf eine zusätzliche Unterfeuerung verzichtet werden. Andere ggf. vorteilhafte Ausführungsformen der Erfindung können umfassen, weiterhin eine volle Unterfeuerung vorzunehmen oder diese in reduziertem Umfang gegenüber einem herkömmlichen Verfahren vorzunehmen.

Eine derartige Unterfeuerung ist herkömmlicherweise einerseits vorgesehen, um eine minimale Temperatur, typischerweise mindestens 1.060 °C, zur Zerstörung von Nebenkomponenten wie Benzol, Toluol und Xylenen (BTX) aufrechtzuerhalten. Andererseits ist eine derartige Unterfeuerung herkömmlicherweise auch dann erforderlich, wenn das Gasgemisch derart mager an Schwefelwasserstoff ist, dass die Verbrennungstemperatur unter 900 °C absinkt und damit keine stabile Flamme zur Verbrennung erzeugt werden kann.

Durch den sauerstoffangereicherten Betrieb kann aufgrund der geringeren oder wegfallenden Verdünnung durch das Inertgas Stickstoff die Flammentemperatur erhöht werden. In solchen Fällen erweist sich das erfindungsgemäß vorgeschlagene Verfahren als besonders ressourcenschonend, da für die Befeuerung eines entsprechenden Claus-Ofens kein wertvolles Erdgasprodukt erforderlich ist und keine zusätzlichen Emissionen erzeugt werden. Wird keine Unterfeuerung vorgenommen, stammt das in dem Claus-Abgas enthaltene Kohlendioxid vollständig aus dem Erdgas, ansonsten auch aus der Verbrennung des zusätzlich unterfeuerten Brennstoffs, beispielsweise Erdgas oder anderen Gasgemischen. Ein sich anschließender Reduktionsgasgenerator, falls vorhanden, wird typischerweise stets unterfeuert, so dass auf diese Weise zusätzliches Kohlendioxid eingebracht wird.

Im Falle sehr magerer Sauergaszusammensetzungen, beispielsweise einem Gehalt von lediglich von 20% Schwefelwasserstoff, ist eine zusätzliche Unterfeuerung auch bei einem sauerstoffangereicherten Betrieb erforderlich. Um dies zu vermeiden, können sehr magere Sauergasgemische, beispielsweise mit einem Gehalt von lediglich 20% Schwefelwasserstoff, zunächst mittels eines absorptiven Verfahren, beispielsweise dem sogenannten FLEXSORB-Verfahren, an Schwefelwasserstoff angereichert werden, bevor sie in der Claus-Anlage umgesetzt werden.

Gemäß einer besonders bevorzugten Ausführungsform der vorliegenden Erfindung ist vorgesehen, dass dem oder den Claus-Öfen zusätzlich Wasser, beispielsweise in Form von Wasserdampf, zugeführt wird. Diese Verfahrensvariante ist grundsätzlich bereits in der WO 2015/176180 A1 beschrieben. Es ist bekannt, dass insbesondere im Zusammenhang mit einer Sauerstoffanreicherung durch die Zufuhr von Wasser in die Verbrennungsflamme dem Claus-Prozess bei gleichem Ergebnis weniger Sauerstoff zugeführt werden muss. Wie jedoch im Rahmen der vorliegenden Anmeldung überraschend erkannt wurde, wird bei einer entsprechenden Wassereinbringung auch Wasserstoff in beträchtlichem Umfang gebildet werden. Durch Zufuhr von Wasser in den oder die Claus-Öfen kann weiteres in der Claus-Anlage dissoziierbares Wasser eingebracht werden, so dass Sauerstoff und, wie erfindungsgemäß erkannt wurde, auch Wasserstoff, in verstärktem Umfang in situ gebildet werden können. Der auf diese Weise erzeugte Sauerstoff reduziert die Menge an zusätzlich zuzuführendem Sauerstoff und führt daher zu einer weiteren Einsparung.

Überraschenderweise wurde, wie erwähnt, im Rahmen der vorliegenden Erfindung herausgefunden, dass durch die Wasserzufuhr in die Verbrennungsflamme im Claus-Ofen auch ein höherer Wasserstoffgehalt im Claus-Abgas resultiert. Daher kann auf diese Weise auch der Gehalt des im Rahmen der vorliegenden Erfindung zu gewinnenden Wasserstoffs, der nicht bzw. zur zu Teilen in einer hydrierenden Abgasbehandlung reagiert, in dem Claus-Abgas erhöht werden.

In dem erfindungsgemäß vorgeschlagenen Verfahren wird zumindest ein Teil des Claus-Abgases einer Hydrierstufe einer Abgasbehandlung in einer Abgasbehandlungseinheit unterworfen. Im Rahmen der vorliegenden Erfindung kann dabei insbesondere der gewonnene Wasserstoff zumindest zum Teil zusätzlich zu oder anstelle von in einem Reduziergasgenerator erzeugten Wasserstoff zur hydrierenden Abgasbehandlung verwendet und damit insbesondere stromab der katalytische(n) Claus-Stufe(n) und stromauf der Abgasnachbehandlung mit dem Claus-Abgas vereinigt werden. Auf diese Weise kann auf einen Reduziergasgenerator verzichtet oder dieser zumindest kleiner und kostengünstiger als im Stand der Technik ausgeführt werden. Es ist auch möglich, weiterhin einen entsprechenden Reduziergasgenerator einzusetzen, so dass in diesem Fall das Claus-Abgas mit weiterem Wasserstoff, der in einem Reduziergasgenerator gewonnen wird, angereichert wird, insbesondere bevor es der Abgasbehandlung unterworfen wird.

Anstelle der oder zusätzlich zur Verwendung eines Reduziergasgenerators ist es in einer weiteren Ausgestaltung der vorliegenden Erfindung auch möglich, extern bereitgestellten Wasserstoff in das Claus-Abgas einzuspeisen.

Mit besonderem Vorteil wird auch der Reduziergasgenerator, falls ein solcher eingesetzt wird, sauerstoffangereichert betrieben. Auf diese Weise wird auch durch den Reduziergasgenerator kein zusätzlicher Stickstoff in das Claus-Abgas eingetragen und die Gewinnung des Wasserstoffs erleichtert sich entsprechend.

Wie bereits mehrfach erwähnt, wird im Rahmen der vorliegenden Erfindung insbesondere ein aus Erdgas abgetrenntes Sauergasgemisch eingesetzt. Insbesondere in dem aus Erdgas abgetrennten Sauergasen ist der Schwefelwasserstoffgehalt typischerweise vergleichsweise niedrig. Er liegt üblicherweise im Bereich von 50% bis 80%, kann jedoch auch Werte von nur ca. 20% erreichen. In Sauergasen aus Raffinerien kann Schwefelwasserstoffgehalt dagegen auch bei bis zu 95% liegen. Im verbleibenden Anteil bestehen entsprechende Sauergase typischerweise überwiegend oder ausschließlich aus Kohlendioxid.

Werden nun herkömmliche Claus-Anlagen unter Verwendung von Umgebungsluft betrieben, wird das Claus-Abgas, in Abhängigkeit von der Zusammensetzung des jeweiligen Sauergases, vergleichsweise hohe Stickstoffgehalte von 50% und mehr aufweisen, wohingegen der Gehalt an Kohlendioxid deutlich unter 50% liegt. Wenn beispielsweise ein entsprechendes Sauergas 50 Mol-% Schwefelwasserstoff, 5 bis 10 Mol-% Wasser und 40 bis 45 Mol-% Kohlendioxid enthält, sind herkömmlicherweise im Claus-Abgas stromab des Reduziergasgenerators nur noch 26 Mol-% Kohlendioxid und 62 Mol-% Stickstoff enthalten. Dies erschwert die Gewinnung von Wasserstoff, die insbesondere unter Abtrennung von Kohlendioxid erfolgt, beträchtlich.

Wenn reiner oder im Wesentlichen reiner Sauerstoff im Claus-Ofen eingesetzt wird, enthält das Claus-Abgas direkt stromab der Claus-Anlage (d.h. noch stromauf des Reduktionsgasgenerators) typischerweise im Wesentlichen reines Kohlendioxid mit den entsprechenden Gehalten an Wasserstoff und Verunreinigungen an Schwefeldioxid oder Schwefelverbindungen. Diese Zusammensetzung wird im Rahmen der vorliegenden Erfindung, in der der Reduziergasgenerator vorteilhafterweise, falls vorhanden, ebenfalls sauerstofffrei bzw. sauerstoffarm betrieben wird, nur hinsichtlich einer Abreicherung an Schwefeldioxid verändert. Es wird jedoch kein zusätzlicher Stickstoff eingebracht.

Restmengen an Stickstoff können ggf. im Rahmen der vorliegenden Erfindung toleriert werden. Diese können beispielsweise aus einem zwar sauerstoffreichen, jedoch nicht vollständig stickstofffreien Gasgemisch stammen, das dem Claus-Ofen zugeführt wird. Die Verwendung sauerstoffreicher und Restmengen anderer Komponenten enthaltender Gasgemische ermöglicht einen besonders kostengünstigen Betrieb bzw. eine kostengünstige und energieeffiziente Bereitstellung entsprechender Gemische, beispielsweise mittels einer "unscharf" trennenden Luftzerlegungsanlage, die besonders energieeffizient betrieben werden kann.

Im Zuge der erfindungsgemäß vorgesehenen Gewinnung von Wasserstoff kann auch Kohlendioxid oder ein kohlendioxidreiches Gasgemisch gewonnen werden. Die Gewinnung von Kohlendioxid ist bei einem sauerstoffangereicherten Betrieb ebenfalls erleichtert, da dieses nicht von Stickstoff abgetrennt werden muss. In entsprechender Weise erhaltenes Kohlendioxid kann beispielsweise in der Tertiärförderung von Erdöl, wie sie nachfolgend kurz umrissen wird, eingesetzt werden.

Die Förderung von Erdöl bzw. Erdgas erfolgt im Wesentlichen in drei Phasen. In der ersten Phase, der Primärförderung, lässt sich das Erdöl bzw. Erdgas oft ohne weitere Maßnahmen durch den Eigendruck in der Lagerstätte fördern. In größerer Tiefe steht das Erdöl bzw. Erdgas zu Beginn der Förderung i.d.R. unter Druck.

In der zweiten Phase, der Sekundärförderung, reicht der Eigendruck der Lagerstätte nicht mehr aus, um das Erdöl bzw. Erdgas an die Oberfläche zu transportieren. Der Druck in der Lagerstätte wird daher durch Einpressen von Wasser, Dampf oder Gas über Leitungen erhöht, die mittels Bohrungen in die Lagerstätte abgetäuft werden, die auch als Injektionsbohrungen bezeichnet werden.

Grundsätzlich können Lagerstätten Erdöle mit hochviskosen Eigenschafen enthalten. Werden ferner im Laufe der Ölförderung aus einem in der Lagerstätte enthaltenem weniger viskosen Erdöl flüchtigere Komponenten ausgefördert, wird das in der Lagerstätte verbleibende Erdöl zunehmend viskos, zäh, dicht und/oder bitumenartig. Es ist daher vergleichsweise schwerer zu fördern. Entsprechendes gilt auch für Erdöl, das beispielsweise durch Kapillarwirkung in Gesteins- oder Erdschichten festgehalten wird. Weiteres Erdöl kann dann nur noch über Verfahren der sogenannten Tertiärförderung gewonnen werden.

Bei der Tertiärförderung, im Falle von Erdöl im Englischen auch als Enhanced Oil Recovery (EOR) bezeichnet, werden Fluide unter Druck direkt in die Lagerstätte eingepresst. Insbesondere kann dabei Kohlendioxid verwendet werden. Kohlendioxid erhöht zum einen den Druck in der Lagerstätte und löst sich zum anderen unter geeigneten Bedingungen im Erdöl. Durch das im Erdöl gelöste Kohlendioxid wird dessen Viskosität deutlich verringert und die Förderung verbessert.

Ein ähnliches Anwendungsgebiet von Kohlendioxid liegt in der Ausbeutung von Flöz- bzw. Grubengasen wie dem sogenanntem Coal Bed Methane (CBM), adsorptiv gebundenem Methan in Kohlenlagerstätten mit mehr als 90% Methangehalt. Kohlendioxid wird im Rahmen der sogenannten Enhanced CBM Recovery ebenfalls in entsprechende Lagerstätten eingepresst. Auch zur verbesserten Ausbeutung von Ölschiefern und Ölsanden (engl. Tar Sands) und anderen Lagerstätten kann Kohlendioxid vorteilhaft zur Förderung verwendet werden.

Für die genannten Anwendungen werden im Allgemeinen Gasgemische mit einem hohen Anteil an Kohlendioxid benötigt. In bestimmten Fällen ist es vorteilhaft, wenn entsprechende Gasgemische einen möglichst geringen Anteil von Verunreinigungen wie Argon, Sauerstoff, Wasser, Kohlenmonoxid sowie Stickstoff- und Schwefeloxiden enthalten. Insbesondere kann ein geringer Sauerstoffgehalt wünschenswert sein.

Die vorliegende Erfindung erlaubt parallel zur Gewinnung des Wasserstoffs auch eine Gewinnung von Kohlendioxid oder eines an Kohlendioxid reichen Gasgemischs zum Einsatz in einem entsprechenden Verfahren. Mit anderen Worten kann als Quelle für ein an Kohlendioxid reiches Gasprodukt ein Claus-Abgas oder ein aufbereitetes Claus-Abgas aus einer Abgasbehandlungseinheit eingesetzt werden.

Bei einem nicht sauerstoffangereicherten Betrieb müsste Kohlendioxid aus dem Claus-Abgas mittels bekannter Verfahren zur Sauergasentfernung, beispielsweise durch eine Aminwäsche, abgetrennt werden. Aufgrund der erwähnten geringen Konzentration von Kohlendioxid müssen entsprechende Einheiten jedoch groß ausgeführt werden, was zu ausgesprochen hohen Erstellungskosten entsprechender Anlagen führt. Insbesondere die Behandlung des Waschmittels (Erwärmung zur Desorption und anschließende Kühlung) verursacht erhöhte Betriebskosten.

Diese Nachteile werden durch den Einsatz der vorliegenden Erfindung behoben. Durch den sauerstoffangereicherten Betrieb einer Claus-Anlage und der sich anschließenden Aufreinigung des Claus-Abgases in der TGTU kann ein im Wesentlichen reines Kohlendioxid mit Anteilen an Wasserstoff als verbleibendes Claus-Abgas gewonnen werden. Aus einem entsprechenden Gemisch können Wasserstoff und Kohlendioxid aufgrund ihrer großen Siedepunktsunterschiede besonders einfach kryogen voneinander getrennt werden. Alternativ könnten Membranen für die Trennung von Kohlendioxid und Wasserstoff zum Einsatz kommen. Das auf diese Weise erhaltene Kohlendioxid kann beispielsweise bereits in der für die Tertiärförderung benötigten Reinheit vorliegen bzw. muss für entsprechende Zwecke nur in geringerem Umfang aufgereinigt werden. Der gewonnene Wasserstoff ist ebenfalls ohne aufwendige weitere Bearbeitung nutzbar.

Nachfolgend werden nochmals Aspekte des erfindungsgemäßen Verfahrens und seiner zuvor erläuterten bevorzugten Ausgestaltungen erläutert.

Wie erläutert, wird in einem Claus-Ofen insbesondere Schwefelwasserstoff, der in einem entsprechenden Sauergasgemisch enthalten ist, unter Einsatz eines Sauerstoff enthaltenden Gases oder Gasgemischs verbrannt, wodurch sich Schwefeldioxid bildet. Die katalytischen Claus-Stufen sind dafür eingerichtet, dass Schwefeldioxid katalytisch mit nicht verbranntem Schwefelwasserstoff umzusetzen, wodurch ein Gasgemisch gebildet wird, das hier als Claus-Abgas bezeichnet wird, und das aufgrund der Abscheidung von elementarem Schwefel, der sich bei der Umsetzung des Schwefelwasserstoffs mit dem Schwefeldioxid bildet, an diesen Komponenten abgereichert ist. Ein entsprechendes Claus-Abgas enthält jedoch aufgrund der nicht vollständigen katalytischen Reaktion noch Restmengen an Schwefeldioxid, die in einer Abgasnachbehandlungseinheit der zuvor erläuterten Art. d.h. in einer TGTU, abgetrennt bzw. umgesetzt werden.

Auch im vorliegenden Fall kann zumindest ein Teil des Claus-Abgases, das in der Claus-Anlage gebildet wird, mit Wasserstoff, der in einem Reduziergasgenerator gewonnen wird, einer Hydrierstufe in einer der Claus-Anlage nachgeordneten Abgasbehandlungseinheit zugeführt werden. Alternativ kann auch nur in situ gebildeter Wasserstoff, wie oben erläutert, eingesetzt werden. Auch aus dem Claus-Abgas abgetrennter Wasserstoff kann verwendet werden.

Der Betrieb und die Funktionsweise eines entsprechenden Reduziergasgenerators wurden ebenfalls zuvor erläutert. Insbesondere wird in einem entsprechenden Reduziergasgenerator ein Kohlenwasserstoffgemisch, beispielsweise Erdgas, unterstöchiometrisch mit Sauerstoff umgesetzt, wodurch sich Wasserstoff und Kohlenmonoxid (neben Wasser und Kohlendioxid) bilden. Eine typische Abgasbehandlungseinheit umfasst außerdem, wie bereits erläutert, einen nachgeordnete Hydrierstufe, in der das Schwefeldioxid in dem Claus-Abgas, wie erläutert, mit Wasserstoff zu Schwefelwasserstoff umgesetzt und aus dem Claus-Abgas ausgeschleust werden kann.

Gemäß einer besonders bevorzugten Ausführungsform der Erfindung kann durch die erzielbare Zusammensetzung des Claus-Abgases ggf. auch auf eine typischerweise in einer entsprechenden Abgasbehandlungseinheit vorhandene Nachverbrennung verzichtet werden, wodurch sich weitere Resourcen einsparen lassen.

Grundsätzlich kann der Wasserstoff unter Verwendung von Gasgemischen gewonnen werden, die, wie bereits erwähnt, an unterschiedlicher Position in der Claus-Anlage entnommen werden können. So können entsprechende Gasgemische insbesondere zumindest teilweise stromab des Claus-Ofens und/oder stromab der oder zumindest einer der mehreren katalytischen Claus-Stufen der Claus-Anlage entnommen werden. In entsprechender Weise können das oder die Gasgemische, unter dessen oder deren Verwendung der Wasserstoff gewonnen wird, zumindest teilweise stromab der Hydrierstufe und/oder einer Schwefelwasserstoffentfernung der Abgasbehandlungseinheit entnommen werden.

Im überwiegenden Anteil kann ein entsprechendes Gasgemisch Stickstoff und Wasser sowie Wasserstoff und Verunreinigungen in vergleichsweise geringerer Menge enthalten. Vorteilhafterweise beträgt der Gehalt an Stickstoff weniger als 5% und der Gehalt an Wasser mehr als 5%. Es sei darauf hingewiesen, dass in einen Reduziergasgenerator auch das Claus-Abgas selbst eingespeist wird. Dieses wird dabei durch eine Brennkammer geführt, in der auch ein Brennstoff verbrannt wird. Das dem Reduziergasgenerator entnommene Gasgemisch stellt damit ein Gemisch aus Verbrennungsprodukten und dem Claus-Abgas dar.

Mit besonderem Vorteil umfasst die Gewinnung des Wasserstoffs eine kryogene Aufbereitung. Eine derartige kryogene Aufbereitung erweist sich aufgrund der vergleichsweise hohen Gehalte an Kohlendioxid und des großen Siedepunktsunterschieds zwischen Kohlendioxid und Wasserstoff als den wesentlichen Komponenten gegenüber Gasgemischen, die in herkömmlichen Claus-Anlagen und/oder entsprechenden Abgasbehandlungseinheiten gebildet werden, als besonders einfach und effizient. Insbesondere muss aufgrund des geringen Stickstoffgehalts keine aufwendige Wäsche zur Gewinnung von Kohlendioxid erfolgen.

Insbesondere kann einer kryogenen Aufbereitung dabei eine Trocknung vorgeschaltet sein, wie sie grundsätzlich aus dem Stand der Technik bekannt ist. Insbesondere kann eine derartige Trocknung adsorptiv, beispielsweise unter Verwendung von Molsiebadsorbern erfolgen.

Nachfolgend werden die Vorteile der vorliegenden Erfindung anhand mehrerer Beispiele in zwei Beispielgruppen nochmals dargelegt. Die Ergebnisse wurden dabei unter Verwendung der Software VMGSim der Virtual Materials Group erhalten.

In einer ersten Beispielgruppe wurde eine Claus-Anlage mit sogenannter SURE Double-Combustion-Technologie der Firmen WorleyParsons bzw. Linde betrachtet. Für eine weitere Erläuterung dieser Technologie sei auf einschlägige Veröffentlichungen wie beispielsweise Hanson et al., "SURE™ Double Combustion Increases Capacity at the Tesoro Northwest Company Sulfur Plant (Anacortes, WA)", Brimstone Sulfur Conference, 14. bis 17. September 1999, verwiesen. Die entsprechenden Ergebnisse sind jedoch auch mit anderen Anlagenvarianten zu erzielen. Es wurde jeweils eine Anlage mit einer TGTU verwendet.

In der ersten Beispielgruppe wurde ferner ein Sauergasgemisch aus einer Raffinerieanlage als Einsatz in die Claus-Anlage vorgegeben, das gegenüber Sauergasen aus Erdgas mit einem Gehalt von über 70% Schwefelwasserstoff vergleichsweise reich ist. Ein weiteres Charakteristikum ist der vergleichsweise hohe Gehalt an Ammoniak. Die Zusammensetzung des Sauergasgemischs ist in der nachfolgenden Tabelle 1 A angegeben.

**Tabelle 1A - Sauergasgemisch (erste Beispielgruppe)**

| **Komponente** | **Gehalt [Mol-%]** |
|---|---|
| Schwefelwasserstoff | 70,53 |
| Kohlendioxid | 0,64 |
| Wasser | 12,66 |
| Wasserstoff | 2,01 |
| C1-Kohlenwasserstoffe | 0,1 |
| C2-Kohlenwasserstoffe | 0,063 |
| C3-Kohlenwasserstoffe | 0,02 |
| Ammoniak | 13,95 |

Bei den C1-, C2- und C3-Kohlenwasserstoffen handelt es sich um Kohlenwasserstoffe mit einem, zwei und drei Kohlenstoffatomen.

In der ersten Beispielgruppe wurden drei Beispiele betrachtet:
In einem ersten Beispiel, in der nachfolgenden Tabelle 1 B mit "Beispiel A" bezeichnet, wurde der Fall betrachtet, dass der Claus-Ofen, der hier zwei Brennkammern aufweist, mit Luft (also nicht sauerstoffangereichert) und ein Reduziergasgenerator ebenfalls mit Luft (also nicht sauerstoffangereichert) betrieben werden. Die Temperatur in dem Claus-Ofen ergab sich in diesem ersten Beispiel zu 1.310 °C.

In einem zweiten Beispiel, in der nachfolgenden Tabelle 1 B mit "Beispiel B" bezeichnet, wurde der Fall betrachtet, dass der Claus-Ofen mit 100% Sauerstoff statt Luft betrieben wird und der Reduziergasgenerator weiterhin mit Luft betrieben wird. Die Temperatur in der ersten Brennkammer des Claus-Ofens ergab sich in diesem zweiten Beispiel zu 1.439 °C, die Temperatur in der zweiten Brennkammer zu 1.266 °C.

In einem dritten Beispiel, in der nachfolgenden Tabelle 1 B mit "Beispiel C" bezeichnet, wurde der Fall betrachtet, dass der Claus-Ofen und auch der Reduziergasgenerator mit 100% Sauerstoff statt Luft betrieben werden. Die Temperatur in der ersten Brennkammer des Claus-Ofens ergab sich in diesem zweiten Beispiel zu 1.439 °C, die Temperatur in der zweiten Brennkammer zu 1.266 °C, wie im zweiten Beispiel.

Die nachfolgende Tabelle 1 B gibt für das erste, zweite und dritte Beispiel (Beispiel A, Beispiel B, Beispiel C) jeweils die Gehalte an wesentlichen Komponenten des Claus-Abgases an. Die Gehalte sind in Mol-% angegeben. Wie ersichtlich, erreicht der Wasserstoffgehalt in einem Claus-Abgas bei Sauerstoffbetrieb des Claus-Ofens und des Regeneriergasgenerators überraschenderweise mehr als 34 Mol-%.

**Tabelle 1B - Claus-Abgas (erste Beispielgruppe)**

| **Komponente** | **Beispiel A** | **Beispiel B** | **Beispiel C** |
|---|---|---|---|
| Schwefelwasserstoff | 1,732 | 11,183 | 13,212 |
| Kohlendioxid | 1,302 | 5,392 | 6,485 |
| Wasser | 7,764 | 7,800 | 7,800 |
| Wasserstoff | 4,902 | 28,811 | 34,104 |
| Stickstoff | 83,368 | 46,675 | 38,188 |
| Kohlenmonoxid | 0,033 | 0,138 | 0,209 |
| Carbonylsulfid | 0,000 | 0,001 | 0,001 |

In einer zweiten Beispielgruppe wurde eine zweistufige Claus-Anlage mit einer TGTU verwendet. Im Unterschied zur ersten Beispielgruppe wurde hier ferner ein Sauergasgemisch aus einer Erdgasaufbereitung als Einsatz in die Claus-Anlage vorgegeben, das sich gegenüber Sauergasen aus einer Raffinerieanlage durch einen deutlich geringeren Gehalt von Schwefelwasserstoff auszeichnet, aber auch keine nennenswerten Mengen an Ammoniak aufweist. Die Zusammensetzung des Sauergasgemischs ist in der nachfolgenden Tabelle 2A angegeben.

**Tabelle 2A - Sauergasgemisch (zweite Beispielgruppe)**

| **Komponente** | **Gehalt [Mol-%]** |
|---|---|
| Schwefelwasserstoff | 35,41 |
| Kohlendioxid | 52,48 |
| Wasser | 10,55 |
| Stickstoff | 0,96 |
| Methan | 0,13 |
| Sauerstoff | 0,26 |

In der zweiten Beispielgruppe wurden vier Beispiele betrachtet:
In einem vierten Beispiel, in der nachfolgenden Tabelle 2B mit "Beispiel D" bezeichnet, wurde der Fall betrachtet, dass der Claus-Ofen mit Luft (also nicht sauerstoffangereichert) und ein Reduziergasgenerator ebenfalls mit Luft (also nicht sauerstoffangereichert) betrieben werden. Die Temperatur in dem Claus-Ofen ergab sich in diesem vierten Beispiel zu 1.059 °C.

In einem fünften Beispiel, in der nachfolgenden Tabelle 2B mit "Beispiel E" bezeichnet, wurde der Fall betrachtet, dass der Claus-Ofen mit 100% Sauerstoff statt Luft betrieben wird und kein Reduziergasgenerator verwendet wurde. Die Temperatur in dem Claus-Ofen ergab sich in diesem fünften Beispiel zu 1.067 °C.

In einem sechsten Beispiel, in der nachfolgenden Tabelle 2B mit "Beispiel F" bezeichnet, wurde der Fall betrachtet, dass der Claus-Ofen mit 100% Sauerstoff statt Luft betrieben wurde und ein Reduziergasgenerator verwendet wurde, dieser aber weiterhin mit Luft betrieben wurde. Die Temperatur in dem Claus-Ofen ergab sich in diesem sechsten Beispiel ebenfalls zu 1.067 °C.

In einem siebten Beispiel, in der nachfolgenden Tabelle 2B mit "Beispiel G" bezeichnet, wurde der Fall betrachtet, dass der Claus-Ofen mit 100% Sauerstoff statt Luft betrieben wurde und der Reduziergasgenerator ebenfalls mit 100% Sauerstoff statt mit Luft betrieben wurde. Die Temperatur in dem Claus-Ofen ergab sich in diesem siebten Beispiel ebenfalls zu 1.067 °C.

Die nachfolgende Tabelle 2B gibt für das vierte, fünfte, sechste und siebte Beispiel (Beispiel D, Beispiel E, Beispiel F, Beispiel G) jeweils die Gehalte an wesentlichen Komponenten des Claus-Abgases an. Die Gehalte sind in Mol-% angegeben. Wie ersichtlich, erreicht der Wasserstoffgehalt in einem Claus-Abgas bei Sauerstoffbetrieb des Claus-Ofens und des Regeneriergasgenerators auch hier nutzbare Werte.

**Tabelle 1B - Claus-Abgas (erste Beispielgruppe)**

| **Komponente** | **Beispiel D** | **Beispiel E** | **Beispiel F** | **Beispiel G** |
|---|---|---|---|---|
| Schwefelwasserstoff | 1,45 | 3,18 | 2,89 | 3,11 |
| Kohlendioxid | 33,24 | 80,19 | 73,89 | 79,46 |
| Carbonylsulfid | 0,00 | 0,01 | 0,01 | 0,01 |
| Kohlenmonoxid | 0,28 | 0,67 | 0,64 | 0,70 |
| Wasserstoff | 3,35 | 6,73 | 6,67 | 7,18 |
| Stickstoff | 53,55 | 1,93 | 7,96 | 1,88 |
| Argon | 0,64 | 0,01 | 0,01 | 0,01 |
| Wasser | 7,49 | 7,30 | 7,93 | 7,64 |

Es versteht sich, dass weitgehend identische Ergebnisse in den vorstehend erläuterten Beispielen auch dann erzielt werden können, wenn anstelle von 100% Sauerstoff sauerstoffreiche Gasgemische oder (im Wesentlichen, d.h. technisch) reiner Sauerstoff eingesetzt wird.

Die vorliegende Erfindung erstreckt sich ferner auf eine Anlage zur Gewinnung von Wasserstoff, bezüglich derer auf den entsprechenden unabhängigen Patentanspruch verwiesen wird. Eine derartige Anlage ist insbesondere zur Durchführung eines Verfahrens eingerichtet, wie es zuvor in Ausgestaltungen erläutert wurde, und weist hierzu entsprechend eingerichtete Mittel auf. Auch zu den diesbezüglichen Merkmalen und Vorteilen sei daher auf die obigen Ausführungen ausdrücklich verwiesen.

Das erfindungsgemäß vorgeschlagene Verfahren zur Gewinnung eines Syntheseprodukts umfasst, Wasserstoff und ein oder mehrere weitere Edukte einer Synthesereaktion zu unterwerfen. Erfindungsgemäß wird dabei der Wasserstoff unter Verwendung eines Verfahrens und/oder unter Verwendung einer Anlage wie zuvor erläutert gewonnen. Auch zu den Merkmalen und Vorteilen eines entsprechenden Verfahrens sei daher auf die obigen Erläuterungen verwiesen.

In einer besonders vorteilhaften Ausgestaltung dieses Verfahrens wird eine Luftzerlegungsanlage verwendet, mittels derer Sauerstoff oder ein gegenüber atmosphärischer Luft an Sauerstoff angereichertes Gasgemisch gebildet und der Claus-Anlage zugeführt wird. Vorteilhafterweise wird unter Verwendung der Luftzerlegungsanlage ferner Stickstoff oder ein gegenüber atmosphärischer Luft an Stickstoff angereichertes Gasgemisch gebildet, wobei der Stickstoff als das oder zumindest eines der weiteren Edukte verwendet wird. Insbesondere kann auf diese Weise eine Ammoniaksynthese vorgenommen werden, deren Edukte Wasserstoff und Stickstoff aus der Claus-Anlage einerseits und der Luftzerlegungsanlage andererseits stammen. Auf diese Weise kann neben dem Sauerstoff aus der Luftzerlegungsanlage, oder einem entsprechenden an Sauerstoff angereicherten Gasgemisch, das für den sauerstoffangereicherten Betrieb der Claus-Anlage verwendet wird, insbesondere auch der in der Luftzerlegungsanlage gebildete Stickstoff in vorteilhafter Weise genutzt werden, so dass sich ein weiterer Synergieeffekt ergibt.

In einer weiteren bevorzugten Ausgestaltung der vorliegenden Erfindung kann vorgesehen sein, entsprechend gebildeten Ammoniak zusammen mit ebenfalls in einem entsprechenden Verfahren gebildeten (nämlich aus dem Claus-Abgas abgetrennten) Kohlendioxid einer Harnstoffsynthese an sich bekannter Art zuzuführen. In dieser Ausgestaltung der vorliegenden Erfindung können sämtliche Edukte der Harnstoffsynthese in dem Verfahren selbst produziert werden.

Gemäß einer weiteren bevorzugten Ausgestaltung der vorliegenden Erfindung kann aus dem in dem Claus-Prozess abgetrennten Schwefel auch Schwefelsäure hergestellt werden. Dies kann auch insbesondere im Rahmen des sogenannten "Wet Sulfuric Acid"-(WSA-)Prozesses erfolgen, wie er aus der einschlägigen Fachliteratur bekannt ist. Die Schwefelsäure kann mit dem ggf. gebildeten Ammoniak zu Ammoniumsulfat umgesetzt werden. Auch hierbei stammen sämtliche Edukte aus dem Prozess selbst.

Wiederum sei bezüglich der erfindungsgemäß ebenfalls vorgeschlagenen Anlage zur Gewinnung eines Syntheseprodukts auf den entsprechenden unabhängigen

Patentanspruch verwiesen. Eine derartige Anlage ist insbesondere zur Durchführung eines Verfahrens eingerichtet, wie es zuvor in Ausgestaltungen erläutert wurde, und weist hierzu entsprechend eingerichtete Mittel auf. Auch zu den diesbezüglichen Merkmalen und Vorteilen sei daher auf die obigen Ausführungen verwiesen.

Die Erfindung wird nachfolgend unter Bezugnahme auf die beigefügte Zeichnung näher erläutert, welche eine bevorzugte Ausgestaltung der vorliegenden Erfindung veranschaulicht.

### Kurze Beschreibung der Zeichnung

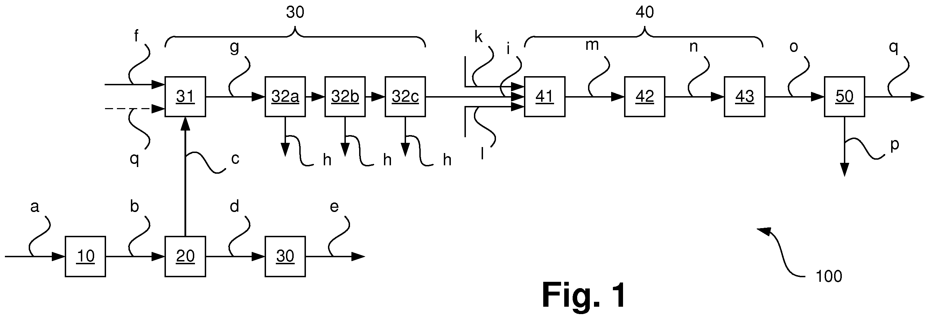

Figur 1 zeigt ein Verfahren 100 gemäß einer Ausführungsform der vorliegenden Erfindung in stark vereinfachter schematischer Darstellung.

### Ausführliche Beschreibung der Zeichnung

In Figur 1 ist ein Verfahren gemäß einer bevorzugten Ausführungsform der vorliegenden Erfindung veranschaulicht und insgesamt mit 100 bezeichnet. Die Erläuterungen bezüglich des Verfahrens 100 betreffen eine entsprechende Anlage in gleicher Weise, so dass, wenn nachfolgend auf Verfahrensschritte Bezug genommen wird, die Erläuterungen in gleicher Weise für Anlagenkomponenten gelten.

In dem Verfahren 100 gemäß der hier veranschaulichten Ausführungsform wird ein Erdgasstrom a einem oder mehreren Aufbereitungsschritten 10, die grundsätzlich aus dem Stand der Technik bekannt sind, zugeführt. Ein auf diese Weise gebildeter, aufbereiteter Erdgasstrom b wird einer Sauergasentfernung 20 zugeführt, in der, beispielsweise unter Verwendung physikalischer und/oder chemischer Wäschen, ein Sauergasstrom c aus dem aufbereiteten Erdgasstrom d abgetrennt wird. Stromauf und/oder stromab der Sauergasentfernung 20 kann insbesondere auch eine Verdichtung erfolgen. Es verbleibt ein von Sauergas befreiter Erdgasstrom d, der einem oder mehreren weiteren Aufbereitungsschritten 30 zugeführt wird. In diesem oder diesen wird ein aufbereiteter Erdgasstrom e erhalten.

Der Sauergasstrom c wird einer Claus-Anlage 30 zugeführt, die im dargestellten Beispiel einen Claus-Ofen 31 sowie drei katalytische Claus-Stufen 32a, 32b und 32c umfasst. Dem Claus-Ofen 31 wird im dargestellten Beispiel ein Sauerstoffstrom f bzw. ein entsprechender sauerstoffreicher Strom f zugeführt. Je nach dem Schwefelwasserstoffgehalt des Sauergasstroms c kann, wie hier gestrichelt veranschaulicht, ferner ein Brenngasstrom q eingespeist werden. Wie mehrfach erwähnt, aber hier nicht im Detail veranschaulicht, kann auch Wasser bzw. Wasserdampf in den oder die Claus-Öfen 31 eingespeist werden.

Durch teilweise Verbrennung des Schwefelwasserstoffs in den Sauergasstrom c mittels des Claus-Ofens 31 wird ein Gasstrom g erhalten, der neben nicht verbranntem Schwefelwasserstoff sowie Kohlendioxid auch bei der Verbrennung gebildetes Schwefeldioxid enthält. Der Gasstrom g wird nacheinander unter jeweiliger Abscheidung von Schwefel, wie hier in Form der Stoffströme h stark vereinfacht veranschaulicht, durch die katalytischen Claus-Stufen 32a, 32b und 32c geführt.

Die Claus-Anlage 30 verlässt ein Strom i von sogenanntem Claus-Abgas, welcher einer Abgasbehandlungseinheit 40 zugeführt wird. Das Claus-Abgas enthält insbesondere Kohlendioxid, Wasserstoff und Reste an Schwefeldioxid, die in den katalytischen Claus-Stufen 32a bis 32c nicht zu Schwefel umgesetzt wurden. Die Abgasbehandlungseinheit 40 umfasst im dargestellten Beispiel einen Reduziergasgenerator 41, eine Hydriereinheit 42, eine Schwefelwasserstoffentfernung 43 und eine optionale und daher nicht dargestellte Nachverbrennung. Wie erwähnt, kann im Rahmen der vorliegenden Erfindung auch ggf. auf den Reduziergasgenerator 41 verzichtet werden. Dem Reduziergasgenerator 41 werden neben dem Claus-Abgas i Sauerstoff bzw. ein sauerstoffreicher Stoffstrom k und ein Brenngasstrom I zugeführt.

Ein dem Reduziergasgenerator 41 entnommenes Gasgemisch, das insbesondere Kohlendioxid, Wasserstoff, Kohlenmonoxid und Reste an Schwefeldioxid aufweist, wird in Form eines Stoffstroms m der Hydriereinheit 42 zugeführt, wo Schwefeldioxid mit Wasserstoff katalytisch zu Schwefelwasserstoff umgesetzt wird. Das auf diese Weise erhaltene Gasgemisch n wird in die Schwefelwasserstoffentfernung 43 eingespeist, wobei, beispielsweise mittels entsprechender Wäschen, Schwefelwasserstoff abgetrennt wird. Das verbleibende Gasgemisch, nun mit o bezeichnet, wird im dargestellten Beispiel einer Kohlendioxidentfernung 50 unterworfen, wo Kohlendioxid in Form eines Stoffstroms p abgetrennt werden kann. Ein verbleibender Rest wird in Form eines Stoffstroms q aus der Kohlendioxidentfernung 50 abgezogen. Dieser enthält in großen Anteilen Wasserstoff und kann direkt oder nach weiterer Aufreinigung als Wasserstoffprodukt des Verfahrens 100 verwendet werden.

## Patentansprüche

1. Verfahren (100) zur Gewinnung von Wasserstoff, **dadurch gekennzeichnet, dass** ein Sauergasgemisch unter Erhalt eines Wasserstoff enthaltenden Claus-Abgases in einer Claus-Anlage (30) mit einem oder mehreren Claus-Öfen (31) und mit einer oder mehreren katalytischen Claus-Stufen (32a, 32b, 32c) bearbeitet wird, wobei der oder die Claus-Öfen (31) sauerstoffangereichert betrieben werden, und dass der Wasserstoff aus zumindest einem Teil des Claus-Abgases oder aus zumindest einem Teil eines aufbereiteten Gasgemischs, das unter Verwendung zumindest eines Teils des Claus-Abgases gebildet wird, gewonnen wird.

2. Verfahren (100) nach Anspruch 1, wobei dem oder den Claus-Öfen (31) reiner Sauerstoff oder ein oder mehrere gegenüber atmosphärischer Luft an Sauerstoff angereicherte Gasgemische zugeführt werden.

3. Verfahren (100) nach einem der vorstehenden Ansprüche, wobei dem oder den Claus-Öfen (31) oder der gesamten Claus-Anlage (30) ausschließlich an Stickstoff arme oder freie Gase oder Gasgemische zugeführt werden.

4. Verfahren (100) nach einem der vorstehenden Ansprüche, wobei dem oder den Claus-Öfen (31) ausschließlich an Kohlenwasserstoffen arme oder freie Gase oder Gasgemische zugeführt werden.

5. Verfahren (100) nach einem der vorstehenden Ansprüche, wobei dem oder den Claus-Öfen (31) Wasser und/oder Wasserdampf zugeführt wird.

6. Verfahren (100) nach einem der vorstehenden Ansprüche, wobei zumindest ein Teil des Claus-Abgases einer Hydrierstufe (42) einer Abgasbehandlung in einer Abgasbehandlungseinheit (40) unterworfen wird.

7. Verfahren (100) nach einem der vorstehenden Ansprüche, wobei das Claus-Abgas mit weiterem Wasserstoff, der in einem Reduziergasgenerator (41) gewonnen wird, angereichert wird.

8. Verfahren (100) nach Anspruch 7, bei dem der Reduziergasgenerator (41) sauerstoffangereichert betrieben wird.

9. Verfahren (100) nach einem der vorstehenden Ansprüche, bei dem das Sauergasgemisch aus Erdgas abgetrennt wird.

10. Verfahren (100) nach einem der vorstehenden Ansprüche, bei dem zumindest der Teil des Claus-Abgases oder zumindest der Teil des aufbereiteten Gasgemischs, aus dem der Wasserstoff gewonnen wird, zumindest einer Kohlendioxidabtrennung (50) unterworfen wird.

11. Anlage zur Gewinnung von Wasserstoff, **gekennzeichnet durch** eine Claus-Anlage (30) mit einem oder mehreren Claus-Öfen (31) und mit einer oder mehreren katalytischen Claus-Stufen (32a, 32b, 32c), wobei die Claus-Anlage eingerichtet ist, ein Sauergasgemisch unter Erhalt eines Wasserstoff enthaltenden Claus-Abgases zu bearbeiten und wobei der oder die Claus-Öfen (31) für einen sauerstoffangereicherten Betrieb eingerichtet sind, und durch Mittel, die dafür eingerichtet sind, Wasserstoff aus zumindest einem Teil des Claus-Abgases oder zumindest einem Teil eines aufbereiteten Gasgemischs, das unter Verwendung zumindest eines Teils des Claus-Abgases gebildet wird, zu gewinnen.

12. Verfahren zur Gewinnung eines Syntheseprodukts, bei dem Wasserstoff und ein oder mehrere weitere Edukte einer Synthesereaktion unterworfen werden, **dadurch gekennzeichnet, dass** der Wasserstoff unter Verwendung eines Verfahrens nach einem der Ansprüche 1 bis 10 und/oder unter Verwendung einer Anlage nach Anspruch 11 gewonnen wird.

13. Verfahren nach Anspruch 12, bei dem eine Luftzerlegungsanlage verwendet wird, mittels derer Sauerstoff oder ein gegenüber atmosphärischer Luft an Sauerstoff angereichertes Gasgemisch gebildet und der Claus-Anlage zugeführt wird.

14. Verfahren nach Anspruch 13, bei dem unter Verwendung der Luftzerlegungsanlage ferner Stickstoff oder ein gegenüber atmosphärischer Luft an Stickstoff angereichertes Gasgemisch gebildet wird, wobei der Stickstoff als das oder zumindest eines der weiteren Edukte verwendet wird.

15. Anlage zur Gewinnung eines Syntheseprodukts, die Mittel aufweist, Wasserstoff und ein oder mehrere weitere Edukte einer Synthesereaktion zu unterwerfen, **dadurch gekennzeichnet, dass** die Anlage zur Gewinnung des Wasserstoffs eine oder mehrere Anlagenkomponenten, die zur Durchführung eines Verfahrens nach einem der Ansprüche 1 bis 10 eingerichtet sind, und/oder eine Anlage nach Anspruch 11 aufweist.
